# EUROPEAN PATENT APPLICATION

(11) **EP 2 495 731 A1**
(43) Date of publication of application: **05.09.2012**
(21) Application number: 12155764.9
(22) Date of filing: 16.02.2012
(51) Int. Cl.: H01B 3/28, H01B 3/44, C08K 5/00, C08L 23/16, H01B 7/295

(54) **Insulating material composition for automotive electric cable with excellent abrasion resistance and flame retardancy, and automotive electric cable using the same**

(30) Priority: 21.02.2011 KR 20110015052
(71) Applicant: LS Cable & System Ltd., Anyang-si, Gyeonggi-do 431-080 (KR)
(72) Inventor: Kim, Sun-Keun, 435-040 Gyeonggi-do (KR); Kim, Hyun-Seok, 431-080 Gyeonggi-do (KR); Lee, Jae-Ik, 463-885 Gyeonggi-do (KR)
(74) Representative: advotec.

(57) **Abstract**

Disclosed is an insulating material composition for an automotive electric cable including a base resin composed of 10 to 50 w% of polypropylene resin, polyethylene resin, or a mixture thereof, 20 to 80 w% of polyolefin elastomer resin, and 10 to 30 w% of maleic anhydride-grafted polyethylene resin, 1 to 8 parts by weight of a crosslinking agent, 1 to 10 parts by weight of an antioxidant, and 120 to 180 parts by weight of a flame retardant, per 100 parts by weight of the base resin.

## Description

### BACKGROUND

### Technical Field

The present invention relates to an insulating material composition for an automotive electric cable and an automotive electric cable using the same.

### Background Art

Generally, automotive electric cables should meet the design standards set forth by automobile manufacturers or harness manufacturers as well as various test standards. According to the International ISO 6722 Standards, the temperature classes of polymer materials that compose the automotive electric cables that are located in the interior/exterior and rear trunk of an automotive are mainly Class 1 (85°C) and Class 2 (100°C). For example, polyvinyl chloride (abbreviated "PVC") is used as Class 1 insulating material, and crosslinked polyvinyl chloride (abbreviated "XL-PVC") or high-temperature PVC containing a plasticizer is used as Class 2 insulating material.

Crosslinked polyethylene containing halogen or recyclable non-crosslinked polypropylene containing halogen is conventionally used as Class 3 (125°C) insulating material. However, the use of halogen as a flame retardant goes against the environmental protection regulations that are being strictly enforced all over the world.

Also, according to the ISO 6722 standard, insulating materials for automotive electric cables must ensure basic mechanical properties and electrical insulation, and be designed to endure the environment inside and outside of the automotive, especially in terms of heat resistance, low-temperature resistance, abrasion resistance, and flame retardancy. However, these properties have a tradeoff where when one property improves, the other property deteriorates.

Accordingly, there is a need for a halogen-free insulating material composition for an automotive electric cable that meets the heat resistance, low-temperature resistance, abrasion resistance and flame retardancy requirements.

### DISCLOSURE

### Technical Problem

It is an object of the present invention to provide an insulating material composition for an automotive electric cable that is excellent in heat resistance, low-temperature resistance, abrasion resistance, and flame retardancy.

### Technical Solution

To achieve the object, an insulating material composition for an automotive electric cable according to an aspect of the present invention may include a base resin composed of 10 to 50 w% of polypropylene resin, polyethylene resin, or a mixture thereof, 20 to 80 w% of polyolefin elastomer resin, 10 to 30 w% of maleic anhydride-grafted polyethylene resin, 1 to 8 parts by weight of a crosslinking agent, 1 to 10 parts by weight of an antioxidant, and 120 to 180 parts by weight of a flame retardant, per 100 parts by weight of the base resin.

An automotive electric cable according to another aspect of the present invention may have an insulator manufactured of an insulating material composition including a base resin composed of 10 to 50 w% of polypropylene resin, polyethylene resin, or a mixture thereof, 20 to 80 w% of polyolefin elastomer resin, 10 to 30 w% of maleic anhydride-grafted polyethylene resin, 1 to 8 parts by weight of a crosslinking agent, 1 to 10 parts by weight of an antioxidant, and 120 to 180 parts by weight of a flame retardant, per 100 parts by weight of the base resin.

The polypropylene resin may have a flexural modulus of 500 to 18,000 kgf/cm² and Shore D hardness of 10 to 80. The polyethylene resin may have a flexural modulus of 6,000 to 14,000 kgf/cm² and Shore D hardness of 30 to 80. The polyolefin elastomer resin may have a flexural modulus of 20 to 400 kgf/cm² and Shore A hardness of 50 to 95.

Preferably, the crosslinking agent may be trimethylopropane trimethacrylate (TMPTMA) having viscosity of 10 to 80 cps at 25°C or vinyl trimethoxy silane (VTMOS) having viscosity of 1 to 20 cps at 25°C.

Preferably, the antioxidant may be at least two selected from the group consisting of a phenol-based antioxidant, a sulfur-based antioxidant, an amine-based antioxidant, and a phosphor-based antioxidant, in particular, preferably a mixture of a phenol-based antioxidant and a sulfur-based antioxidant.

The flame retardant may be metal hydroxide.

### EFFECT OF THE INVENTION

An insulator for an automotive electric cable manufactured using the insulating material composition according to the present invention has excellent heat resistance, low-temperature resistance, abrasion resistance, and good flame retardancy, despite using a halogen-free flame retardant in an excessive amount to show the effects of the flame retardant, and thus is useful in automotive electric cables.

### DETAILED DESCRIPTION

The present invention will now be described in detail. Prior to description, it should be understood that terms and words used in the specification and the appended claims should not be construed as having common and dictionary meanings, but should be interpreted as having meanings and concepts corresponding to technical ideas of the present invention in view of the principle that the inventor can properly define the concepts of the terms and words in order to describe his/her own invention as best as possible.

An insulating material composition for an automotive electric cable according to the present invention may include a base resin composed of 10 to 50 w% of polypropylene resin, polyethylene resin, or a mixture thereof, 20 to 80 w% of polyolefin elastomer resin, 10 to 30 w% of maleic anhydride-grafted polyethylene resin, 1 to 8 parts by weight of a crosslinking agent, 1 to 10 parts by weight of an antioxidant, and 120 to 180 parts by weight of a flame retardant, per 100 parts by weight of the base resin.

The polypropylene resin, polyethylene resin, or mixture thereof according to the present invention is used to improve the abrasion resistance and low-temperature resistance, and for this purpose, may have preferable flexural modulus and Shore D hardness.

The polypropylene resin may have a flexural modulus of 500 to 18,000 kgf/cm², preferably 1,000 to 13,500 kgf/cm². When the flexural modulus is less than 500 kgf/cm², the low-temperature resistance improves but the composition becomes too flexible to ensure the workability of a harness. When the flexural modulus exceeds 18,000 kgf/cm², the low-temperature resistance reduces and whitening may occur in the electric cable applications.

Also, the polypropylene resin may have Shore D hardness of 10 to 80, preferably 20 to 70. When the Shore D hardness is less than 10, the needle scrape abrasion resistance reduces, and when the Shore D hardness exceeds 80, the low-temperature resistance reduces and whitening may occur in the electric cable applications.

The polyethylene resin may have a flexural modulus of 6,000 to 14,000 kgf/cm², preferably 8,000 to 13,000 kgf/cm². When the flexural modulus is less than 6,000 kgf/cm², the low-temperature resistance improves but the composition becomes too flexible to ensure the workability of a harness. When the flexural modulus exceeds 14,000 kgf/cm², the low-temperature resistance reduces and whitening may occur in the electric cable applications.

Also, the polyethylene resin may have Shore D hardness of 30 to 80, preferably 40 to 70. When the Shore D hardness is less than 30, the needle scrape abrasion resistance reduces, and when the Shore D hardness exceeds 80, the low-temperature resistance reduces and whitening may occur in the electric cable applications.

The content of the polypropylene resin, polyethylene resin, or mixture thereof according to the present invention may be preferably 10 to 50 w%. When the content is less than 10 w%, the needle scrape abrasion resistance reduces, and when the content exceeds 50 w%, the low-temperature resistance reduces in the electric cable applications.

The polyolefin elastomer resin of the present invention is used to improve the filler loading and low-temperature resistance, and for this purpose, may have preferable flexural modulus and Shore A hardness.

The polyolefin elastomer resin may have a flexural modulus of 20 to 400 kgf/cm², preferably 40 to 100 kgf/cm². When the flexural modulus is less than 20 kgf/cm², the needle scrape abrasion resistance reduces, and when the flexural modulus exceeds 400 kgf/cm², the low-temperature resistance and filler loading reduces in the electric cable applications, and consequently may deteriorate the mechanical properties of an insulating material to be prepared.

Also, the polyolefin elastomer resin may have Shore A hardness of 50 to 95, preferably 60 to 90. When the Shore A hardness is less than 50, the needle scrape abrasion resistance reduces, and when the Shore A hardness exceeds 95, the low-temperature resistance and filler loading reduces in the electric cable applications, and consequently may deteriorate the mechanical properties of an insulating material to be prepared.

The content of the polyolefin elastomer resin according to the present invention may be preferably 20 to 80 w%. When the content is less than 20 w%, the low-temperature resistance reduces in the electric cable applications, and when the content exceeds 80 w%, the abrasion resistance reduces in the electric cable applications.

The maleic anhydride-grafted polyethylene resin of the present invention may improve the abrasion resistance and an interfacial adhesive bond between the base resin and the flame retardant. To achieve this, the content of the maleic anhydride-grafted polyethylene resin may be 10 to 30 w%.

The insulating material composition of the present invention includes the crosslinking agent, and when the insulating material composition is crosslinked, polymer chains of the base resin may form a network to improve the heat resistance and abrasion resistance of the composition. As the crosslinking agent, trimethylopropane trimethacrylate (TMPTMA) or vinyl trimethoxy silane (VTMOS) may be used. When trimethylopropane trimethacrylate (TMPTMA) is used as the crosslinking agent, the insulating material composition of the present invention may be crosslinked by electron beam irradiation, and when vinyl trimethoxy silane (VTMOS) is used, the insulating material composition may be water-crosslinked.

The trimethylopropane trimethacrylate (TMPTMA) may have viscosity of 10 to 80 cps at 25°C, preferably 20 to 55 cps. When the viscosity is less than 10 cps, the dispersibility improves but the composition becomes difficult to handle and has a low flash point and thus may be volatilized during processing. When the viscosity exceeds 80 cps, the dispersibility may reduce so that it makes a difference in the degree of crosslinking after processing.

The content of the trimethylopropane trimethacrylate (TMPTMA) may be 1 to 8 parts by weight, preferably 1 to 6 parts by weight, per 100 parts by weight of the base resin. When the content is less than 1 part by weight, the degree of crosslinking reduces, and in this case, if the amount of electron beam irradiation is increased to obtain a predetermined degree of crosslinking, the productivity reduces. When the content exceeds 8 parts by weight, the abrasion resistance reduces and the manufacturing costs increase.

The vinyl trimethoxy silane (VTMOS) may have viscosity of 1 to 20 cps at 25°C, preferably 3 to 10 cps. When the viscosity is less than 1 cps, the composition has a low flash point and thus may be volatilized during processing. When the viscosity exceeds 20 cps, the crosslinking rate increases, which makes it difficult to control the compounding conditions, resulting in reduced productivity.

The content of the vinyl trimethoxy silane (VTMOS) may be 1 to 8 parts by weight, preferably 3 to 8 parts by weight, per 100 parts by weight of the base resin. When the content is less than 1 part by weight, the degree of crosslinking reduces, and to obtain a predetermined degree of crosslinkng, an additional process for heat and moisture supply is needed, resulting in reduced productivity and increased manufacturing costs. When the content exceeds 8 parts by weight, the manufacturing costs increase and the likelihood that crosslinking will proceed during compounding increases, resulting in degradation in the crosslinking performance.

The antioxidant of the present invention may have synergy effects with the crosslinking agent to further improve the heat resistance. The antioxidant may be mixtures of at least two antioxidants from a phenol-based antioxidant, a sulfur-based antioxidant, amine-based antioxidant and phosphor-based antioxidant, preferably a mixture of a phenol-based antioxidant and a sulfur-based antioxidant.

The content of the antioxidant may be 1 to 10 parts by weight, preferably 2 to 6 parts by weight, per 100 parts by weight of the base resin. When the content is 1 part by weight, the anti-oxidation effect is not sufficient to ensure the long-term heat resistance of an insulating material to be prepared, and when the content exceeds 10 parts by weight, an excess of the antioxidant acts as impurities to reduce the abrasion resistance of an insulating material to be prepared.

The flame retardant of the present invention may be metal hydroxide, for example, aluminum hydroxide, magnesium hydroxide, or magnesium hydroxide carbonate, singularly or in combination. Preferably, the content of the flame retardant may be 120 to 180 parts by weight per 100 parts by weight of the base resin.

The insulating material composition for an automotive electric cable according to the present invention may further include an additive such as a processing aid, when needed.

Further, the present invention may provide an automotive electric cable with an insulation layer produced using the above insulating material composition.

Hereinafter, the present invention will be described in detail through specific examples. However, the description proposed herein is just a preferable example for the purpose of illustrations only, not intended to limit the scope of the invention, so it should be understood that the examples are provided for a more definite explanation to an ordinary person skilled in the art.

To address the change in the performance depending on the ingredients of the insulating material composition for an automotive electric cable according to the present invention, insulating material compositions of examples and comparative examples were prepared using the ingredients and their contents shown in Tables 1 and 2 below. In Tables 1 and 2, the contents of resins composing the base resin were indicated in w% and the contents of the other ingredients, that is, the crosslinking agent, the antioxidant, and the flame retardant were indicated on the basis of parts by weight per 100 parts by weight of the base resin.

**Table 1**

| Ingredients | Example 1 | Example 2 | Example 3 | Example 4 |
|---|---|---|---|---|
| Polypropylene resin 1 | 30 | 30 | | |
| Polypropylene resin 2 | | | | |
| Polyethylene resin 1 | | | 35 | 35 |
| Polyethylene resin 2 | | | | |
| Polyolefin elastomer resin 1 | 60 | 60 | 55 | 55 |
| Polyolefin elastomer resin 2 | | | | |
| Polyolefin elastomer resin 3 | | | | |
| Maleic anhydride-grafted polyethylene resin | 10 | 10 | 10 | 10 |
| TMPTMA 1 | 3 | | | 3 |
| TMPTMA 2 | | | | |
| VTMOS 1 | | 5.5 | 5.5 | |
| VTMOS 2 | | | | |
| Phenol-based antioxidant | 2 | 2 | 2 | 2 |
| Sulfur-based antioxidant | 1 | 1 | 1 | 1 |
| Phosphor-based antioxidant | | | | |
| Amine-based antioxidant | | | | |
| Flame retardant | 150 | 150 | 140 | 150 |
| Additive | 5 | 5 | 5 | 5 |

**Table 2**

| Ingredients | Comparative example 1 | omparative example 2 | Comparative example 3 | Comparative example 4 | Comparative example 5 | Comparative example 6 | Comparative example 7 | Comparative example 8 |
|---|---|---|---|---|---|---|---|---|
| Polypropylene resin 1 | | | | 30 | | 30 | | |
| Polypropylene resin 2 | 30 | | | | | | | |
| Polyethylene resin 1 | | | 35 | | 35 | | 35 | 35 |
| Polyethylene resin 2 | | 30 | | | | | | |
| Polyolefin elastomer resin 1 | 60 | 60 | | | 55 | 60 | 55 | 55 |
| Polyolefin elastomer resin 2 | | | 55 | | | | | |
| Polyolefin elastomer resin 3 | | | | 60 | | | | |
| Maleic anhydride-grafted polyethylene resin | 10 | 10 | 10 | 10 | 10 | 10 | 10 | 10 |
| TMPTMA 1 | 3 | | 3 | | 3 | 3 | | |
| TMPTMA 2 | | | | | | | | 3 |
| VTMOS 1 | | 5.5 | | 5.5 | | | | |
| VTMOS 2 | | | | | | | 5.5 | |
| Phenol-based antioxidant | 2 | 2 | 2 | 2 | 0.5 | 2 | 2 | 2 |
| Sulfur-based antioxidant | 1 | 1 | I | 1 | | 3 | 1 | 1 |
| Phosphor-based antioxidant | | | | | | 2 | | |
| Amine-based antioxidant | | | | | | 4 | | |
| Flame retardant | 110 | 150 | 140 | 140 | 140 | 140 | 140 | 140 |
| Additive | 5 | 5 | 5 | 5 | 5 | 5 | 5 | 5 |

### [Description of Ingredients in Tables 1 and 2]

* Polypropylene resin 1: Flexural modulus 1,500 kgf/cm², Shore D hardness 48
* Polypropylene resin 2: Flexural modulus 19,000 kgf/cm², Shore D hardness 90
* Polyethylene resin 1: Flexural modulus 8,000 kgf/cm², Shore D hardness 54
* Polyethylene resin 2: Flexural modulus 4,300 kgf/cm², Shore D hardness 28
* Polyolefin elastomer resin 1: Flexural modulus 78 kgf/cm², Shore A hardness 90
* Polyolefin elastomer resin 2: Flexural modulus 15 kgf/cm², Shore A hardness 34
* Polyolefin elastomer resin 3: Flexural modulus 130 kgf/cm², Shore A hardness 97
* Trimethylopropane trimethacrylate 1 (TMPTMA 1): Viscosity 40 cps at 25°C
* TMPTMA 2: Viscosity 110 cps at 25°C
* Vinyl trimethoxy silane 1 (VTMOS 1): Viscosity 7 cps at 25°C
* VTMOS 2: Viscosity 30 cps at 25°C
* Phenol-based antioxidant: Tetrakis[methylene-3-(3,5-di-tert-butyl-4-hydroxyphenyl)propionate]methane
* Sulfur-based antioxidant: Dioctadecyl 3,3'-thiodipropionate
* Phosphor-based antioxidant: Tris(2,4-di-tert-butylphenyl)phosphite
* Amine-based antioxidant: 4,4'-bis(α,α-dimethylbenzyl)diphenylamine
* Flame retardant: Magnesium hydroxide
* Additive: Processing aid (zinc stearate)

### Determination and Evaluation of Properties

Each of the insulating material compositions according to examples 1 to 4 and comparative examples 1 to 8 was put in a twin-screw extruder to manufacture an insulation layer. Next, an automotive electric cable was manufactured by a conventional method using a conductor of 0.5 mm² diameter and the insulation layer surrounding the conductor. Each automotive electric cable specimen was tested to determine and evaluate the tensile strength, heat resistance, low-temperature resistance, abrasion resistance, and flame retardancy. The results are shown in Tables 3 and 4 below. The test conditions are briefly described below.

### A. Tensile strength

The automotive electric cable specimen was cut to 10 cm length, and the conductor located therein was removed. The resultant specimen with no conductor was tested using an impact test machine (ITM) at a tensile rate of 200 mm/min. After this test was performed on five specimens, an average was calculated.

### B. Heat resistance

To evaluate the heat resistance of the specimen according to ISO 6722, after the specimen was placed at 125°C for 3,000 hours, the dielectric breakdown characteristics and elongation were determined. The withstand voltage after bending should be 1 kV and elongation should be 100% or more.

### C. Low-temperature resistance

To evaluate the low-temperature resistance of the specimen according to ISO 6722, the specimen was subject to a load defined in the standard, placed at -40°C for 4 hours, and then wound on a predetermined round bar. No dielectric breakdown is required to meet the low-temperature resistance requirement.

### D. Abrasion resistance

To evaluate the abrasion resistance of the specimen according to ISO 6722, the specimen was scraped with a needle of 0.45 mm diameter under 7N load. No dielectric breakdown for 300 abrasion cycles or more is required.

### E. Flame retardancy

To evaluate the flame retardancy of the specimen according to ISO 6722, the specimen was subject to 45 degree angle flame in the vertical orientation for 15 seconds. The flame must extinguish within 70 seconds.

**Table 3**

| Evaluation items | | Example 1 | Example 2 | Example 3 | Example 4 |
|---|---|---|---|---|---|
| Tensile strength (kgf/mm²) | | 2.30 | 2.12 | 1.89 | 1.78 |
| Heat resistance | Withstand voltage after bending (kV) | 10 | 10 | 10 | 10 |
| | Elongation (%) | 180 | 160 | 240 | 190 |
| Low-temperature resistance | Withstand voltage after bending (kV) | Pass | Pass | Pass | Pass |
| Abrasion resistance (cycle) | | 623 | 459 | 584 | 426 |
| Flame retardancy | | Pass | Pass | Pass | Pass |

**Table 4**

| Evaluation items | | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|
| Tensile (kgf/mm²) | strength | 2.67 | 1.45 | 1.56 | 2.31 | 1.93 | 1.13 | 0.94 | 0.87 |
| Heat resistance | Withstand voltage after bending (KV) | 10 | 10 | 8 | 10 | 3.5 | 10 | 2 | 5 |
| | Elongation (%) | 126 | 135 | 89 | 84 | Broken | 190 | 74 | 90 |
| Low-temperature resistance | Withstand voltage after bending (KV) | Fail | Pass | Pass | Fail | Pass | Pass | Pass | Pass |
| Abrasion resistance (cycle) | | 940 | 120 | 78 | 320 | 590 | 124 | 229 | 283 |
| Flame retardancy | | Fail | Pass | Pass | Fail | Pass | Pass | Pass | Pass |

As seen in Table 3, the specimens of examples 1 to 4 satisfied the tensile strength, heat resistance and abrasion resistance requirements and passed the tests for low-temperature resistance and flame retardancy.

On the contrary, as seen in Table 4, the specimen of comparative example 1 failed the test for low-temperature resistance due to the use of polypropylene resin having high flexural modulus and Shore D hardness, and failed the test for flame retardancy due to the use of a flame retardant in a small amount.

The specimen of comparative example 2 passed the test for low-temperature resistance but did not satisfy the abrasion resistance requirement (300 cycles or more) due to the use of polyethylene resin having low flexural modulus and Shore D hardness.

The specimen of comparative example 3 did not satisfy the heat resistance requirement (elongation of 100% or more) and abrasion resistance requirement (300 cycles or more) due to the use of polyolefin elastomer resin having low flexural modulus and Shore A hardness.

The specimen of comparative example 4 did not satisfy the low-temperature resistance and heat resistance requirements due to the use of polyolefin elastomer resin having high flexural modulus and Shore A hardness, and failed the test for flame retardancy.

The specimen of comparative example 5 remarkably reduced in the heat resistance due to the use of an antioxidant in a small amount, for example, 0.5 parts by weight.

The specimen of comparative example 6 improved in the heat resistance due to the use of an antioxidant in an excessive amount, for example, 11 parts by weight, but an excess of the antioxidant acted as impurities to reduce the abrasion resistance.

The specimen of comparative example 7 reduced in the processing performance due to the use of VTMOS having excessively high viscosity as a processing aid, and as a result, did not satisfy the heat resistance and abrasion resistance requirements.

The specimen of comparative example 8 reduced in the processing performance due to the use of TMPTMA having excessively high viscosity as a processing aid, and as a result, did not satisfy the heat resistance and abrasion resistance requirements.

The results above show that an insulator manufactured of the insulating material composition for an automotive electric cable according to the present invention and an automotive electric cable with the same satisfies the tensile strength, heat resistance and abrasion resistance requirements and has excellent low-temperature resistance and flame retardancy. This is because the insulating material composition of the present invention includes a base resin composed of polypropylene resin having optimum flexural modulus and Shore D hardness, polyethylene resin having optimum flexural modulus and Shore D hardness, and polyolefin resin having optimum flexural modulus and Shore A hardness, and suitable amounts of a crosslinking agent, an antioxidant and a flame retardant.

Although the present invention has been described hereinabove, it should be understood that the detailed description and specific examples, while indicating preferred embodiments of the invention, are given by way of illustration only, since various changes and modifications within the spirit and scope of the invention will become apparent to those skilled in the art from this detailed description.

## Claims

1. An insulating material composition for an automotive electric cable comprising:
a base resin including 10 to 50 w% of polypropylene resin, polyethylene resin, or a mixture thereof, 20 to 80 w% of polyolefin elastomer resin, and 10 to 30 w% of maleic anhydride-grafted polyethylene resin; and
per 100 parts by weight of the base resin,
1 to 8 parts by weight of a crosslinking agent;
1 to 10 parts by weight of an antioxidant; and
120 to 180 parts by weight of a flame retardant.

2. The insulating material composition for an automotive electric cable according to claim 1,
wherein the polypropylene resin has a flexural modulus of 500 to 18,000 kgf/cm² and Shore D hardness of 10 to 80.

3. The insulating material composition for an automotive electric cable according to claim 1 or 2,
wherein the polyethylene resin has a flexural modulus of 6,000 to 14,000 kgf/cm² and Shore D hardness of 30 to 80.

4. The insulating material composition for an automotive electric cable according to one of claims 1 to 3,
wherein the polyolefin elastomer resin has a flexural modulus of 20 to 400 kgf/cm² and Shore A hardness of 50 to 95.

5. The insulating material composition for an automotive electric cable according to one of claims 1 to 4,
wherein the crosslinking agent is trimethylopropane trimethacrylate (TMPTMA) or vinyl trimethoxy silane (VTMOS).

6. The insulating material composition for an automotive electric cable according to claim 5,
wherein the trimethylopropane trimethacrylate (TMPTMA) has viscosity of 10 to 80 cps at 25°C.

7. The insulating material composition for an automotive electric cable according to claim 5,
wherein the vinyl trimethoxy silane (VTMOS) has viscosity of 1 to 20 cps at 25°C.

8. The insulating material composition for an automotive electric cable according to one of claims 1 to 7,
wherein the antioxidant is at least two selected from the group consisting of a phenol-based antioxidant, a sulfur-based antioxidant, an amine-based antioxidant, and a phosphor-based antioxidant.

9. The insulating material composition for an automotive electric cable according to one of claims 1 to 8,
wherein the antioxidant is a mixture of a phenol-based antioxidant and a sulfur-based antioxidant.

10. The insulating material composition for an automotive electric cable according to one of claims 1 to 9,
wherein the flame retardant is metal hydroxide.

11. An automotive electric cable with an insulator manufactured of an insulating material composition, the insulating material composition comprising:
a base resin including 10 to 50 w% of polypropylene resin, polyethylene resin, or a mixture thereof, 20 to 80 w% of polyolefin elastomer resin, 10 to 30 w% of maleic anhydride-grafted polyethylene resin; and
per 100 parts by weight of the base resin,
1 to 8 parts by weight of a crosslinking agent;
1 to 10 parts by weight of an antioxidant; and
120 to 180 parts by weight of a flame retardant.

12. The automotive electric cable according to claim 11,
wherein the polypropylene resin has a flexural modulus of 500 to 18,000 kgf/cm² and Shore D hardness of 10 to 80.

13. The automotive electric cable according to claim 11 or 12,
wherein the polyethylene resin has a flexural modulus of 6,000 to 14,000 kgf/cm² and Shore D hardness of 30 to 80.

14. The automotive electric cable according to one of claims 11 to 13,
wherein the polyolefin elastomer resin has a flexural modulus of 20 to 400 kgf/cm² and Shore A hardness of 50 to 95.

15. The automotive electric cable according to one of claims 11 to 14,
wherein the crosslinking agent is trimethylopropane trimethacrylate (TMPTMA) or vinyl trimethoxy silane (VTMOS).

16. The automotive electric cable according to claim 15,
wherein the trimethylopropane trimethacrylate (TMPTMA) has viscosity of 10 to 80 cps at 25°C.

17. The automotive electric cable according to claim 15,
wherein the vinyl trimethoxy silane (VTMOS) has viscosity of 1 to 20 cps at 25°C.

18. The automotive electric cable according to one of claims 11 to 17,
wherein the antioxidant is at least two selected from the group consisting of a phenol-based antioxidant, a sulfur-based antioxidant, an amine-based antioxidant, and a phosphor-based antioxidant.

19. The automotive electric cable according to one of claims 11 to 18,
wherein the antioxidant is a mixture of a phenol-based antioxidant and a sulfur-based antioxidant.

20. The automotive electric cable according to one of claims 11 to 15,
wherein the flame retardant is metal hydroxide.
